# EUROPEAN PATENT APPLICATION

(11) **EP 1 010 720 A1**
(43) Date of publication of application: **21.06.2000**
(21) Application number: 99204307.5
(22) Date of filing: 14.12.1999
(51) Int. Cl.: C08J 9/08

(54) **Method for preparation of flexible low-density polyurethane foams**

(30) Priority: 17.12.1998 IT MI982716
(71) Applicant: Enichem S.p.A., 20097 S. Donato Milanese (Milano) (IT)
(72) Inventor: Okon, Sam Felix, 35020 Ponte san Nicolo'-Padova (IT); Stefani, Dario, 21100 Varese (IT); Benetti, Ermanno Dino, 30035 Mirano-Venezia (IT); Tartari, Vittorio, 31020 Fontane di Villorba - Treviso (IT)
(74) Representative: De Gregori, Antonella

(57) **Abstract**

Method for production of flexible polyurethane foams with a density of between 12 and 17 Kg/m³, which consists of making a polyisocyanate react with a polyol component in the presence of an expansion system consisting of water, dimethylcarbonate, and a hydrofluorocarbon expansion agent with a number of carbon atoms of between 1 and 6.

## Description

The present invention relates to a method for preparation of flexible polyurethane foams from a low-density block.

More particularly, the present invention relates to a method for production of flexible polyurethane foams from a low density block, which are obtained in the absence of secondary expansion agents of a chlorofluoroalkanic nature, and to the foams thus obtained.

According to the literature, methods are known for preparation of low-density flexible polyurethane foams obtained in the absence of secondary expansion agents of a chlorofluoroalkanic nature, use of which, which is regulated by the Montreal protocol, is tending to be eliminated, owing to the well-known detrimental effects which gases of this type have on the ozone layer in the stratosphere.

Thus, for example, European patent 582 328 describes a method for preparation of flexible polyurethane foams with a density of between 15 and
21 Kg/m³, which consists of making an organic polyisocyanate react with a polyol, selected from amongst the polyether or polyester polyols, or from the polyether polyols which contain ester groups or end amine groups. As the expansion agent, water in a quantity greater than 3 parts per 100 parts of polyol is used, in a mixture with dimethylcarbonate (DMC), with a ratio by weight of DMC/water of between 0.2 and 3. In particular, the examples in this patent describe the preparation of flexible expanded products with a density of no lower than 17 Kg/m³.

Experimental checks, described hereinafter, have shown that with an expansion system based on DMC, which can provide flexible polyurethane products with excellent physical characteristics, it is not possible to obtain foams with a density which is very low, and lower than the aforementioned values.

The applicant has now invented an expansion system based on DMC for polyurethane foams, which can provide products with a density which is lower than the limits of the known art, by using expansion agents which alone, on the other hand, cannot provide a performance level of this type.

The object of the present invention thus consists of a method for production of flexible polyurethane foams with a density of between 12 and 17 Kg/m³, which consists of making a polyisocyanate react with a polyol component, in the presence of an expansion system consisting substantially of water, dimethylcarbonate (DMC), and a hydrofluorocarbon auxiliary expansion agent with a number of carbon atoms of between 1 and 6, and in which the water is present in a quantity greater than 3 parts by weight per 100 parts of polyol component. The dimethylcarbonate is present in quantities such as to provide a ratio by weight of DMC/water of between 0.1 and 5, and the hydrofluorocarbon auxiliary expansion agent is used in a ratio by weight with the DMC, of between 10 and 0.1.

According to the present invention, any organic polyisocyanate can be used in the preparation of the present polyurethane foams, although aromatic or cycloaliphatic polyisocyanates and the corresponding substituted alkyl derivatives are preferred.

In particular, it is possible to use diisocyanates with a low molecular weight, with the general formula (I):

OCN - R - NCO (I),

in which R represents a C₅ - C₂₅ cycloaliphatic or C₆ - C₁₈ aromatic radical, which is optionally replaced by C₁ -C₄ alkyl radicals, such as meta- and/or paraphenylenediisocyanate, 2,4-toluenediisocynate, either alone or in a mixture with the isomer 2,6-toluenediisocynate, 4,4'-diphenylmethane diisocyanate, optionally in a mixture with the isomer 2,4'-4,4'-dicyclohexylmethane diisocyanate, 1-isocyanate-3-isocyanatomethyl-3,3,5-trimethylcyclohexane, etc.

As an alternative, use can be made of polyisocyanates with a medium or high molecular weight, with various levels of condensation, obtained from the phosgenation of aniline-formaldehyde condensates. These products consist of mixtures of polymethylenepolyphenyl polyisocyanates with the general formula (II): 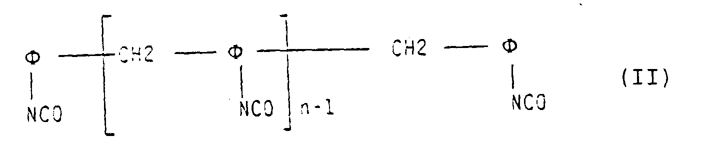 in which Φ represents a phenyl group and n is a whole number which is equivalent to 1 or more.

The polyisocyanates with a medium or high molecular weight, which are preferred according to the present invention, are the polymethylenepolyphenyl polyisocyanates with average functionality of between 2.6 and 2.8. These products are commercially available under various names, such as "TEDIMON 31" (Enichem S.p.A.), "SUPRASEC DNR" (ICI) or DESMODUR 44 V20 (Bayer).

However, the polyisocyanate which is particularly preferred is 2,4-toluenediisocyanate, either alone, or in a mixture with at least 20 weight % of its 2,6 isomer. Non-distilled or untreated toluenediisocyanate, or a partially purified toluenediisocyanate extracted from any stage of the distillation column can commonly be used.

The polyol component comprises at least one polyol which has functionality of between 2 and 8, and an equivalent weight of between 50 and 2000.

These polyols can be selected from amongst the polyether polyols, the polyether polyols which contain ester groups, the polyether polyols which contain conventional amine groups, and the polyester polyols, etc.

The preferred polyols are the polyether polyols obtained by condensation of C₂-C₆ olefin oxides on compounds (starters) which have at least two active hydrogen atoms. The preferred olefin oxides are ethylene oxide, propylene oxide and their mixtures.

The condensation takes place on starters such as glycols, triols, tetrols etc., amines, alkanolamines and polyamines or their mixtures.

Representative examples of polyether polyols to be used according to the present invention are those which end with propylene oxide or ethylene oxide, and in which the starter is a glycol such as dipropyleneglycol; a triol such as glycerol; a tetrol such as pentaerythrol; or a polyfunctional hydroxy alkane, such as xylitol, arabitol, sorbitol, mannitol, etc.

These polyols can be used unaltered, or they can contain in dispersion or partially linked to the polyol chains, solid, preferably polymer particles, with dimensions smaller than 20 µ. Polymers which are suitable for this purpose are: polyacrylonitrile, polystyrene, polyvinylchloride etc., or their mixtures or copolymers, or the polymers with a ureic basis. These solid particles can be prepared by polymerisation in situ of the polyol, or they can be prepared separately, and added to the polyol in a second step.

The polyol composition generally also comprises further additives, which are commonly used in the preparation of polyurethane foams, of the amine catalyst type, such as triethylenediamine, and/or metal catalysts such as stannous octoate, cell regulators, stabilisers against thermal oxidation, pigments etc. Details of the polymerisation of the polyurethanes are described in the text "Saunders & Frisch - Polyurethanes, Chemistry and Technology" Interscience, New York 1964.

When producing the polyurethane foams which are the subject of the present invention, the quantity of water which can be used as one of the components of the expansion system has a critical function, in that by means of the water there is development of carbon dioxide, which gives rise to the process of expansion of the polyurethane resin. Quantities of water of between 3 and 6 parts by weight relative to 100 parts of the polyol components, are those which are most commonly used.
Thus, according to the present invention, for expansion of the polyurethane resin, the primary agent preferably used is carbon dioxide developed in situ by the chemical reaction between water and the NCO groups of the polyisocyanate, and the secondary agents preferably used are the DMC and the hydrofluorocarbon auxiliary expansion agent, for example 1,1,1,2-tetrafluoroethane (HFC 134a).

The method for introduction of the primary expansion agent into the polymerisation mass should not however be understood as limiting, in that other gases and other techniques, such as bubbling of air, CO₂, nitrogen or another inert gas into the reaction mixture by injection from the exterior, which still come within the scope of the present invention, can be used.

The flexible polyurethane foams which are the subject of the present invention have a density lower than 17 Kg/m³, and preferably between 12 and 17 Kg/m³, are free from thermal oxidation deterioration phenomena of the scorching type, and have excellent mechanical properties such as ultimate elongation, permanent deformation, resistance to compression, permeability to air, etc. By means of these characteristics, the foams according to the present invention can validly be used in the industrial sectors of furniture and/or furnishing, and transport and/or cars, which require materials with the above-described properties.

In order better to understand the present invention, and to put it into practice, some illustrative, non-limiting examples are provided hereinafter.

In the examples, the quantities of the various components of the formulations are expressed as parts by weight, unless otherwise indicated.

### EXAMPLE 1:

100 parts of a polyether polyol based on ethylene oxide and propylene oxide, with a molecular weight of 3500 and functionality of 3 (GLENDION FG 3503 made by ENICHEM S.p.A.) are mixed with an expansion system which consists of 4.6 parts of water, 5 parts of DMC, and 2 parts of HFC 134a.

There are then added the catalytic system, consisting of an amine catalyst (0.02 parts of NIAX A1 made by Witco, and 0.06 parts of DABCO 33LV made by Air Products), and of an organo-metallic catalyst (stannous octoate, 0.18 parts of DABCO T.9), and a stabilising agent for cells (1.6 parts of TEGOSTAB BF 2370 made by Goldsmith).

The polyol composition thus obtained is made to react with diisocyanate toluene (TEDIMON 80 made by ENICHEM S.p.A., 80/20 mixture of the isomers 2,4 and 2,6), with an index of 105.

The foams obtained, which have an excellent appearance, have the following characteristics:
density = 14.8 Kg/m³;
ultimate elongation = 251%;
permanent deformation at 75% = 6.1%;
load-bearing capacity 40% = 78 N;
resistance to compression 40% = 1.42 kPa;
permeability to air = 165 N1/min.

### EXAMPLE 2 (Comparative)

The method according to example 1 is followed, but with the following polyol formulation:

| | parts by weight |
|---|---|
| GLENDION FG 3503 | 100 |
| water | 6 |
| DMC | 5 |
| NIAX A1 | 0.02 |
| DABCO 33LV | 0.06 |
| DABCO T-9 | 0.18 |
| TEGOSTAB BF 2370 | 1.6 |

The polyol composition is made to react with TEDIMON 80 with an index of 105.

The foams obtained have obvious traces of scorching, and the following characteristics:
density = 16.5 Kg/m³;
ultimate elongation = 145%;
permanent deformation at 75% = 7.9%;
load-bearing capacity 40% = 80 N;
resistance to compression 40% = 1.52 kPa;
permeability to air = 110 N1/min.

### EXAMPLE 3 (Comparative)

The method according to example 1 is followed, but with the following polyol formulation:

| | parts by weight |
|---|---|
| GLENDION FG 3503 | 100 |
| water | 4.6 |
| HFC 134a | 5 |
| NIAX A1 | 0.02 |
| DABCO 33LV | 0.06 |
| DABCO T-9 | 0.22 |
| TEGOSTAB BF 2370 | 1.6 |

The polyol composition is made to react with TEDIMON 80 with an index of 105.

The foams obtained, which are very irregular, have the following characteristics:
density = 15.5 Kg/m³;
ultimate elongation = 180%;
permanent deformation at 75% = 7.5%;
load-bearing capacity 40% = 77 N;
resistance to compression 40% = 1.49 kPa;
permeability to air = 105 N1/min.

## Claims

1. Method for production of flexible polyurethane foams with a density of between 12 and 17 Kg/m³, which consists of making a polyisocyanate react with a polyol component in the presence of an expansion system consisting substantially of water, dimethylcarbonate (DMC), and a hydrofluorocarbon auxiliary expansion agent with a number of carbon atoms of between 1 and 6, and in which the water is present in a quantity greater than 3 parts by weight per 100 parts of polyol component, the dimethylcarbonate is present in quantities such as to provide a ratio by weight of DMC/water of between 0.1 and 5, and the hydrofluorocarbon auxiliary expansion agent is used in a ratio by weight with the DMC, of between 10 and 0.1.

2. Method according to claim 1, in which the organic polyisocyanate is selected from amongst the aromatic or cycloaliphatic polyisocyanates with the general formula (I):
OCN - R - NCO (I),
in which R represents a C₅ - C₂₅ cycloaliphatic or C₆ - C₁₈ aromatic radical, which is optionally replaced by C₁ - C₄ alkyl radicals.

3. Method according to claim 1, in which the organic polyisocyanate is selected from amongst those with a medium or high molecular weight, with various levels of condensation, obtained from the phosgenation of anilineformaldehyde condensates, with the general formula (II): 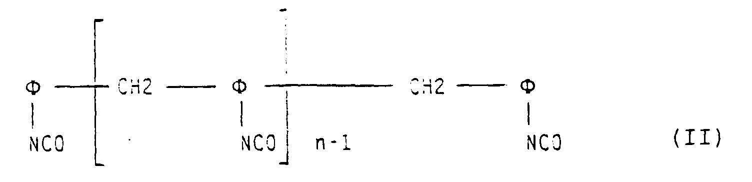 in which Φ represents a phenyl group and n is a whole number which is equivalent to 1 or more.

4. Method according to any one of the preceding claims, in which the polyisocyanate is 2,4-toluenediisocyanate, either alone, or in a mixture with at least 20 weight % of its 2,6 isomer.

5. Method according to any one of the preceding claims, in which the polyol component comprises at least one polyol with functionality of between 2 and 8, and an equivalent weight of between 50 and 2000.

6. Method according to any one of the preceding claims, in which the quantity of water is between 3 and 6 parts by weight relative to 100 parts of polyol component.

7. Method according to any one of the preceding claims, in which the hydrofluorocarbon auxiliary expansion agent is 1,1,1,2-tetrafluoroethane (HFC 134a).

8. Flexible polyurethane foams which can be obtained by means of the method according to any one of the preceding claims, with a density lower than 17 Kg/m³, and preferably between 12 and 17 Kg/m³, which are free from thermal oxidation deterioration phenomena of the scorching type.

9. Use of the polyurethane foams according to claim 8, in the industrial sectors of furniture and/or furnishing, and transport and/or cars.
